# EUROPEAN PATENT APPLICATION

(11) **EP 1 909 117 A1**
(43) Date of publication of application: **09.04.2008**
(21) Application number: 07117785.1
(22) Date of filing: 02.10.2007
(51) Int. Cl.: G01W 1/10

(54) **System and method for indicating predicted weather using sounds and/or music**

(30) Priority: 03.10.2006 US 538067
(71) Applicant: King's Manufacturing Co. Ltd., Hong Kong (HK)
(72) Inventor: Chow, Kenneth, Kennedy Rd, Hong Kong (CN)
(74) Representative: Hengelhaupt, Jürgen

(57) **Abstract**

A weather station predicts weather based an atmospheric pressure readings and plays music and/or nature sounds based an the predicted weather.

## Description

### Technical Field

This invention relates generally to weather stations, and more particularly, but not exclusively, provides a System and method for indicating predicted weather using sounds and/or music.

### Background

Conventionally, weather stations use Barometers to measure atmospheric pressure to predict future weather. Specifically, the trend of change of atmospheric pressure can indicate weather conditions such as sunny, partly cloudy, cloudy and rainy. Trend measurements include the rate of rise or fall of pressure and relative level between highest and lowest measurements. Other sensors can be used to indicate temperature, e.g., a thermometer, and humidity, e.g., a humidity sensor, etc. once the weather is predicted, it can be outputted from the weather station in a visual format (e.g., text, graphs, numbers, etc.) or via voice readout. However, there are currently no other techniques for outputting weather information from a weather station.

Accordingly, a new System and method are needed for outputting weather information.

### SUMMARY

A new system and method provides new techniques for outputting weather information. The system and method predict weather based on atmospheric pressure readings and plays music and/or nature sounds based on the predicted weather.

In an embodiment, the method comprises: receiving sensor data; predicting future weather based on the received data; determining music and/or nature sounds to play based on the predicted weather; and playing the determined music and/or nature sounds.

In an embodiment of the invention, a system comprises a weather engine, a sound engine, and at least one speaker. The weather engine predicts weather based on received sensor data. The sound engine, which is communicatively coupled to the weather engine, determines music and/or nature sounds to play based on the predicted weather. The at least one speaker, which communicatively coupled to the sound engine, outputs the determined music and/or nature sounds.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.
FIG. 1 is diagram illustrating a weather station according to an embodiment of the invention;
FIG. 2 is a block diagram illustrating components of the weather Station; FIG. 3 is a block diagram illustrating persistent memory of the weather Station;
FIG. 4 is a block diagram illustrating a color database of the persistent memory;
FIG. 5 is a block diagram illustrating a sound database of the persistent memory;
FIG. 6 is a block diagram illustrating a music database of the persistent 15 memory; and
FIG. 7 is a flowchart illustrating a method of outputting weather information.

### DETAILED DESCRIPTION OF THE ILLUSTRATED EMBODIMENTS

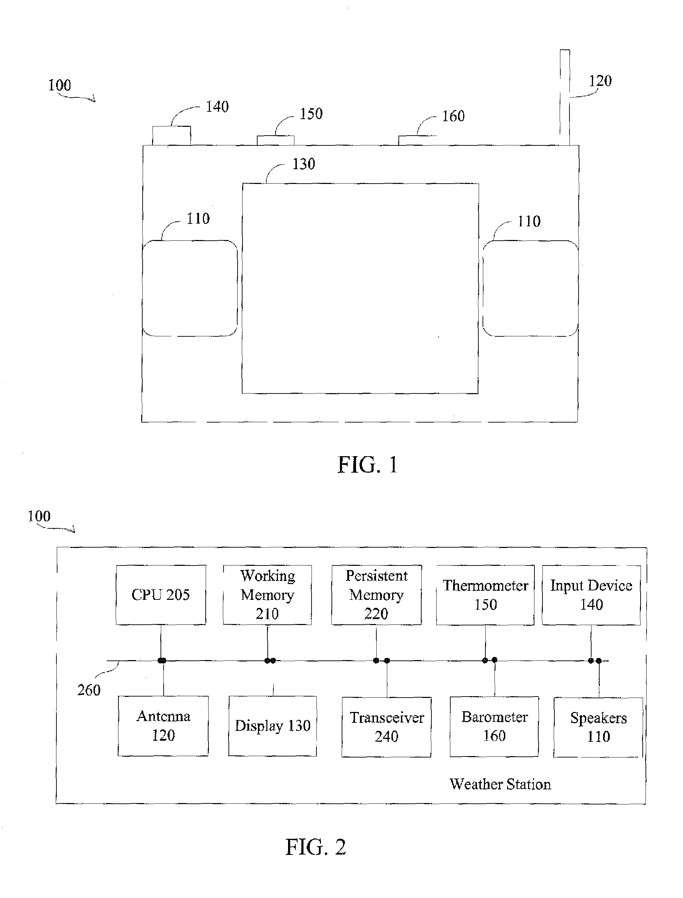

The following description is provided to enable any person having ordinary skill in the art to make and use the invention, and is provided in the context of a particular application and its requirements. Various modifications to the embodiments will be readily apparent to those skilled in the art, and the principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein. FIG. 1 is diagram illustrating a weather station 100 according to an embodiment of the invention. The weather station 100 comprises speakers 110, an antenna 120, a display 130, an input device 140, a thermometer 150 and a barometer 160. During Operation of the weather station 100, the thermometer 150 and/or barometer 160 take temperature and/or pressure readings, respectively. Based on the readings, as will be discussed further below, the weather is predicted and a corresponding color is displayed on the display 130 and corresponding sounds or music are output from the speakers 110.

In an embodiment, the speakers 110 are external, and communicatively coupled to the station 100 via wired, infra-red, radio frequency, internet, telephone, wi-fi, blue tooth and/or other techniques.

In an embodiment of the invention, the thermometer 150 and barometer 160 are located external to the weather station 100 (e.g., outside a house) and broadcasts their readings. The weather station 100 can receive the readings via antenna 120 wirelessly or via an I/O interface (not shown) via wired techniques.

In an embodiment of the invention, the station 100 includes additional sensors, such as a moisture sensor for measuring humidity. A thermal sensor can also be used in addition to the moisture sensor to determine whether the moisture is rain or snow. In an embodiment, other sensors include a rain gauge for measuring rain, anemometer for measuring wind, a UV meter for measuring UV levels, a light meter for measuring brightness and intensity, air quality sensors for measuring air pollution, and/or a seismograph for measuring seismic activity, etc. In an embodiment, sensors (e.g., an analog clock, thermometer, and barometer) are analog and communicatively coupled to an analog to digital converter (ADC) that converts analog signals to digital signals for use by the station 100.

In an embodiment of the invention, the station 100 can also be used as an alarm clock, in which the display 130 displays current time and alarm time, and the speakers 110 sound an alarm according to a time set via the input device 140 by a user.

In an embodiment of the invention, the antenna 120 also receives radio, which can be outputted via the speakers 110. Current frequency settings can be displayed an the display 130 and the frequency can be set via the input device 140.

In an embodiment of the invention, the input device 140 is external, and communicatively coupled to the station 100 via wired, infra-red, radio frequency, 20internet, telephone, wi-fi, blue tooth and/or other techniques.

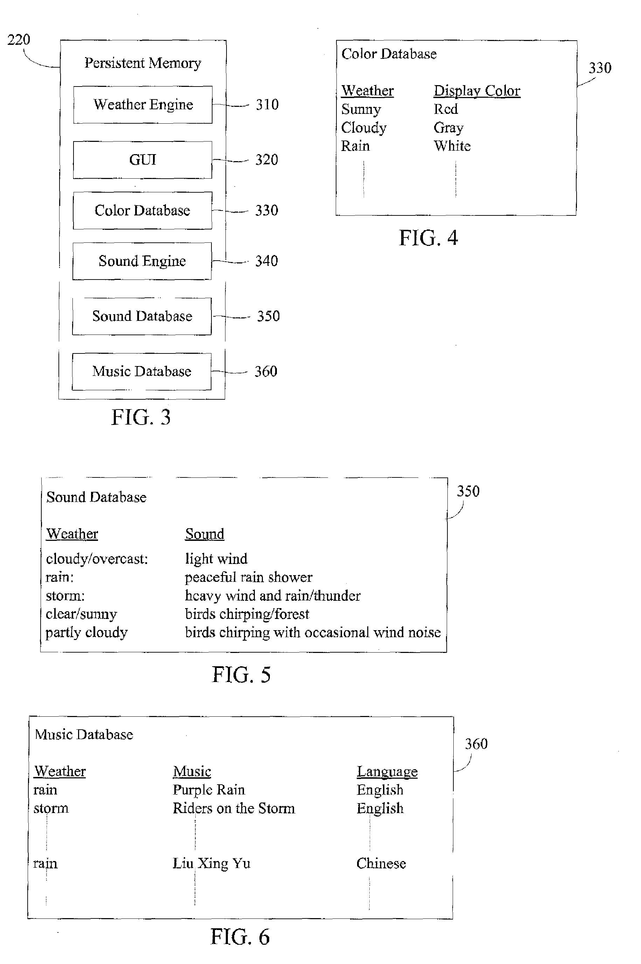

FIG. 2 is a block diagram illustrating components of the weather station 100. The station 100 includes a central processing unit (CPU) 205; a working memory 210; a persistent memory 220; the input device 140; the thermometer 150; a transceiver 230; the antenna 120; the display 130 (e.g., LCD); the barometer 160; the speakers 100; and a transceiver 230; all communicatively coupled to each other via a bus 260. The CPU 205 may include an ARM 7 microprocessor, or any other processor capable to execute software stored in the persistent memory 220. The working memory 210 may include random access memory (RAM) or any other type of read/write memory devices or combination of memory devices. The persistent memory 220 may include 5 a hard drive, a FLASH memory, a read only memory (ROM) or any other type of memory device or combination of memory devices that can retain data after the module 100 is shut off. The transceiver 230 sends and receives data via the antenna 120, e.g., radio for output on the speakers 110 and/or sensor readings.

FIG. 3 is a block diagram illustrating the persistent memory 220 of the weather station. The memory 220 includes a weather engine 310, a graphical user interface (GUI) 320 or other interface, a color database 330, a sound engine 340, a sound database 350, and a music database 360. In an embodiment of the invention, the engines can be implemented as application specific integrated circuits (ASICs) or with other technologies.

The weather engine 310 receives data from sensors, e.g., the thermometer 150 and the barometer 160 and determines future weather based on the received data, as is known to one of ordinary skill in the art. The GUI 320 displays current time, alarm clock setting, radio frequency of received radio broadcasts, temperature from the thermometer 150 and/or pressure from the barometer 160. In addition, the GUI 320 displays a color indicated in the color database 330 corresponding with predicted weather, as determined by the weather engine 310. The entire display 130 or section thereof can be changed to the corresponding color (with a contrasting color for text displayed thereon) or text displayed on the display 130 can be changed to the corresponding color.

The color database 310, as will be discussed in further detail below in conjunction with FIG. 4, includes a list of colors corresponding to weather conditions. As mentioned above, the GUI 320 uses predicted weather from the weather engine 310 to look up the corresponding color in the database 330 and then displays that color over the display 130, a portion thereof, or text displayed on the display 130.

The sound engine 340, like the GUI 320, outputs information corresponding to predicted weather. In particular, the sound engine 340 can output non-vocal information, such as nature sounds from the sound database 350, corresponding to predicted weather according to the weather engine 310. In addition or in place of sounds from the sound database 350, the sound engine 340 can output music from the music database 360 that corresponds to the predicted weather. The music can also be selected by language (e.g., based on language preferred or set by a user, or by country in which the weather station 100 is sold/distributed). The sound database 350 and the music database 360 will be discussed in further detail below in conjunct ion with FIG. 5 and FIG. 6, respectively.

FIG. 4 is a block diagram illustrating the color database 330 of the persistent memory 220. The color database 330 includes a plurality of predicted weather conditions and corresponding colors to display. In one embodiment, a predicted weather of sunny can use the color red for display. A predicted weather of cloudy can use the color gray for display. A predicted weather of rain can use the color white for display. In another embodiment, other colors can be used for the predicted weather and additional predicted weather conditions can have other colors. In an embodiment, each weather condition can also use a plurality of colors (e.g. alternating display of colors or split display of colors). In an embodiment of he invention, the color database 330 also or alternatively includes color corresponding to current temperatures (e.g., red for 80° F and above; white for 32° F and below, etc.).

FIG. 5 is a block diagram illustrating the sound database 350 of the persistent memory 220. The sound database 350 includes a plurality of sounds to be output according to predicted weather from the weather engine 310. In an embodiment, the sounds of the sound database 350 include non-vocal sounds, such as nature sounds. In an embodiment, nature sounds include the sound of light wind for cloudy/overcast weather; the sound of a peaceful rain shower for rain; the sound of heavy wind and rain/thunder for a storm; the sounds of birds chirping/forest for clear/sunny weather; and the sound of birds chirping with occasional wind noise for partly cloudy. In an embodiment of the invention, the sound database 350 also or alternatively includes sounds corresponding to current temperatures.

FIG. 6 is a block diagram illustrating the music database 360 of the persistent memory 220. The music database 360 stores music for output based on predicted weather. In an embodiment, the music includes songs having lyrics corresponding to predicted weather, e.g., for a predicted storm, the song "Riders on the Storm" from The Doors can be outputted. Songs can use lyrics in different languages (e.g., English, Chinese, etc.) depending on a user setting, sale location, or placement location (e.g., by determining position via a global position system receiver). In another embodiment, the music can include music of different genres (e.g., classical, jazz, pop, classic rock, etc.) that correspond to predicted weather. For example, for a predicted storm, the First movement (sonata allegro) of Beethoven's Fifth Symphony can be outputted while for clear/sunny weather Vivaldi's Spring can be outputted. In an embodiment of the invention, the music database 360 also or alternatively includes music corresponding to current temperatures.

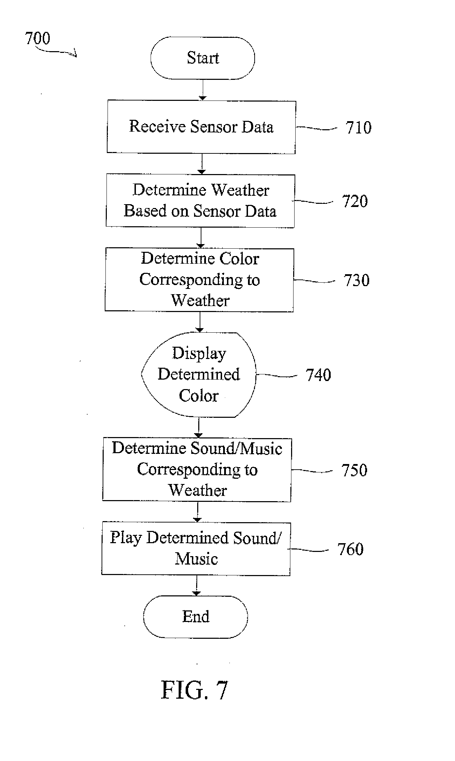

FIG. 7 is a flowchart illustrating a method 700 of outputting weather information. First, sensor data (e.g., pressure data) is received (710). Upcoming weather is then determined (predicted) (720). A color is then determined (730) that corresponds with the predicted weather and displayed (740) on a display, by either displaying text in the determined color or displaying the color on all or a portion of the display. In an embodiment, the determining (730) and displaying (740) is optional.

Next, it is determined (750) what sound (e.g., nature sounds) and/or music to play based on predicted weather. The determined sound and/or music is then played (760). In an embodiment either sound or music, but not both, is played (760). In another embodiment, both sound and music can be played. In another embodiment the determining (750) and playing (760) is optional. The method 700 then ends.

In an embodiment of the invention, the weather engine 310, GUI 320 and sound engine 340 execute the method 700. In an embodiment of the invention, the 15 method 700 is executed in other than the order described above. In addition, the method 700 can be executed repeatedly at regular intervals or continuously. Sections of the method 700 can be executed substantially simultaneously. In an embodiment, colors, sounds and music can instead or in addition correspond to current temperature.

The foregoing description of the illustrated embodiments of the present 20 invention is by way of example only, and other variations and modifications of the above-described embodiments and methods are possible in light of the foregoing teaching. In an embodiment, the station 100 can be used for predicting other events and outputting the prediction in musical format. For example, the station 100 can use techniques known to one of ordinary skill in the art to predict stock market performance and have corresponding music output. In another embodiment, the station 100 can use seismic data for predicting earthquakes and musical output made accordingly. Further, components of this invention may be implemented using a programmed general purpose digital computer, using application specific integrated circuits, or using a network of interconnected conventional components and circuits.

Connections may be wired, wireless, modem, etc. The embodiments described herein are not intended to be exhaustive or limiting. The present invention is limited only by the following claims.

## Claims

1. A method, comprising:
receiving sensor data;
predicting future weather based on the received data;
determining music and/or nature sounds to play based an the predicted weather; and
playing the determined music and/or the determined nature sounds.

2. The method of Claim 1, wherein the sensor data include atmospheric pressure.

3. The method according to one of the preceding claims, wherein the determined music includes lyrics corresponding to the predicted weather.

4. The method according to one of the preceding claims, further comprising displaying a color corresponding to the predicted weather.

5. The method according to one of the preceding claims, wherein the music is non-vocal.

6. A system, comprising:
means for receiving sensor data;
means for predicting future weather based an the received data;
means for determining music and/or nature sounds to play based an the predicted weather; and
means for playing the determined music and/or the determined nature sounds.

7. The system of Claim 6, wherein
the means for predicting future weather comprises a weather engine that is capable of predicting weather based an received sensor data; and
the means for determining music and/or nature sounds comprises a sound engine that is communicatively coupled to the weather engine and capable of determining music and/or nature sounds to play based an the predicted weather; and
the means for playing the determined music and/or nature sounds comprises at least one speaker that is communicatively coupled to the sound engine and capable of outputting the determined music and/or nature sounds.

8. The System according to one of claims of the claims 6 and 7, wherein the sensor data include atmospheric pressure.

9. The System according to one of claims of the claims 6 - 8, wherein the determined music includes lyrics corresponding to the predicted weather.

10. The System according to one of claims of the claims 6 - 9, further comprising a GUI capable of displaying a color corresponding to the predicted weather.

11. The System according to one of claims of the claims 6 - 10, wherein the music is non-vocal.
